Europäisches Patentamt

**European Patent Office**

Office européen des brevets

(19)

(11) Numéro de publication : **0 014 160**
**B1**

(12)

# FASCICULE DE BREVET EUROPÉEN

(45) Date de publication du fascicule du brevet :
**19.05.82**

(51) Int. Cl.³ : **C 03 C 13/00**, C 04 B 31/06

(21) Numéro de dépôt : **80400133.7**

(22) Date de dépôt : **28.01.80**

(54) **Fibres de verre, leur application au renforcement du ciment et produits composites renforcés par ces fibres.**

(30) Priorité : 30.01.79 FR 7902276

(43) Date de publication de la demande :
06.08.80 (Bulletin 80/16)

(45) Mention de la délivrance du brevet :
19.05.82 Bulletin 82/20

(84) Etats contractants désignés :
AT BE CH DE GB IT LU NL SE

(56) Documents cités :
DE - B - 1 040 444
US - A - 3 044 888
US - A - 3 904 424

CHEMICAL ABSTRACTS, vol. 86, no. 22, 30 mai
1977, page 290, abrégé 159993y. Columbus, Ohio,
USA

(73) Titulaire : **ISOVER SAINT-GOBAIN**
**62, Boulevard Victor Hugo**
**F-92209 Neuilly sur Seine (FR)**

(72) Inventeur : **Massol, Jean-Jacques**
**23 Bis, rue Bokanowski**
**F-92600 Asnières (FR)**

(74) Mandataire : **Eudes, Marcel et al**
**Saint-Gobain Recherche 39 Quai Lucien Lefranc**
**F-93304 Aubervilliers Cedex (FR)**

Imprimerie Jouve, 18, rue St-Denis, 75001 Paris, France

# Fibres de verre, leur application au renforcement du ciment et produits composites renforcés par ces fibres

La présente invention concerne des fibres de verre résistant aux milieux fortement basiques, et plus particulièrement des fibres destinées à servir de matériau de renforcement dans des produits à base de ciment.

Actuellement, l'amiante, renfort encore privilégié dans ce domaine d'application, fait l'objet d'une demande de plus en plus importante qui se heurte à plusieurs difficultés : la production d'amiante de bonne qualité a tendance à diminuer et corrélativement, son prix augmente dans des proportions qui risquent de devenir intolérables pour les utilisateurs ; de surcroît, la nocivité de ce produit et les problèmes de pollution qu'il soulève ne sont plus à démontrer.

Pour ces différentes raisons, il devient impératif de trouver une solution de rechange qui soit satisfaisante à la fois aux plans technique, économique et social. Depuis des années, un grand nombre de tentatives ont été effectuées afin de trouver un renfort de substitution remplissant toutes les conditions requises. Un des premiers renforts testés fut la fibre de verre obtenue à partir de verres traditionnels utilisés dans l'industrie de la fibre, comme le verre E ou les laines de roche. L'emploi de ces fibres s'est soldé par un échec car elles sont rapidement attaquées et détruites par le milieu fortement basique qui résulte de l'hydratation du ciment.

Pour remédier à ce manque de stabilité chimique, des chercheurs se sont orientés vers des compositions de verre particulières se caractérisant par de meilleures propriétés mécaniques et chimiques. C'est le cas notamment des verres issus du système ternaire $SiO_2$—$Al_2O_3$—$MgO$ et cités dans les brevets allemands DE 1 026 928 et DE 1 040 444. Cette tentative apporte un progrès incontestable par rapport aux verres traditionnels, mais cependant insuffisant du fait que les propriétés intrinsèques de ces nouveaux verres ne sont pas parfaitement adaptées à ce type d'application. En effet, ces verres, à l'origine, ont été mis au point pour obtenir une plus grande élasticité et une résistance accrue aux intempéries.

D'autres chercheurs se sont dirigés plus récemment vers des compositions mieux appropriées comme celles de verres zirconifères. Ces verres sont, par exemple, issus du système $SiO_2$—$Al_2O_3$—$ZrO_2$—RO, RO représentant des oxydes alcalino-terreux (brevet japonais n° 77 04520), et plus particulièrement du système $SiO_2$—$Al_2O_3$—$ZrO_2$—$MgO$ (brevet américain n° 3 904 424), ou bien d'un système tel que $SiO_2$—R'O—$R_2O$—$ZrO_2$, R'O représentant des oxydes alcalino-terreux, l'oxyde de zinc et de manganèse, $R_2O$ des oxydes alcalins (brevet américain n° 3 861 926).

Certaines de ces compositions destinées à être employées sous forme de fibres se signalent principalement par un pourcentage élevé de $ZrO_2$, généralement supérieur à 10 % et pouvant atteindre 15 à 16 %. Cet oxyde confère au verre une excellente résistance chimique dans des milieux alcalins très agressifs, mais ne garantit pas pour autant un bon comportement des fibres issues de ce type de verre lorsqu'elles sont incorporées dans un produit à base de ciment. De plus, de telles teneurs en $ZrO_2$ augmentent sensiblement le prix de revient de ces fibres, ce qui diminue sérieusement leur intérêt économique.

D'autres compositions comprennent toutefois un pourcentage de $ZrO_2$ inférieur à 10 %. C'est le cas notamment des verres décrits dans le brevet japonais n° 77 04520, mais on constate alors une décroissance considérable de la résistance chimique des verres revendiqués, lorsque le pourcentage pondéral de $ZrO_2$ est abaissé à 5 % ; ou encore du brevet français 1 582 381 dans lequel, pour obtenir une bonne résistance à l'attaque du ciment, on prévoit de revêtir les fibres obtenues d'un film de polymère.

Dans ces deux derniers cas, les solutions proposées comportent donc également des inconvénients non négligeables.

La présente invention a pour objet des fibres de verre répondant à des compositions particulières et présentant divers avantages par rapport aux fibres de verre déjà connues et destinées au renforcement des produits à base de ciment. Les fibres de verre selon l'invention sont obtenues par des procédés connus.

Les constituants principaux des fibres de verre selon l'invention sont $SiO_2$, $MgO$, $Al_2O_3$ et $ZrO_2$, ce dernier oxyde étant introduit en quantité limitée, nettement inférieure à celle que l'on trouve dans les fibres de verre déjà proposées pour le renforcement des produits à base de ciment.

Suivant une première caractéristique, les compositions des fibres de verre faisant l'objet de la présente invention contiennent les constituants suivants selon les limites pondérales ainsi définies :

| | |
|---|---|
| $SiO_2$ | 25 à 54 % |
| $Al_2O_3$ | 20 à 40 % |
| $MgO$ | 24 à 40 % |
| $ZrO_2$ | 1 à 5 % |
| $P_2O_5$ | 0 à 10 % |
| $TiO_2$ | 0 à 10 % |
| $B_2O_3$ | 0 à 10 % |
| F | 0 à 5 % |
| $Cr_2O_3$ | 0 à 2 % |

la somme 2 MgO + Al$_2$O$_3$ étant de préférence supérieure ou égale à 70 %.

La Demanderesse a découvert en effet que les fibres de verre selon l'invention présentent une grande résistance chimique à l'égard d'un milieu particulièrement agressif, tel que la solution formée au cours de l'hydratation d'un produit à base de ciment. Ceci se traduit, pour les composites réalisés à partir de ciment et de fibres selon l'invention, par le maintien de caractéristiques mécaniques élevées, même après des conditions de vieillissement très sévères.

Les très bonnes performances mesurées sur composites, dues initialement à la bonne résistance chimique des fibres selon l'invention, semblent provenir de l'action conjuguée de MgO, à l'exclusion de tout autre oxyde alcalino-terreux, et de ZrO$_2$ introduit en faibles proportions.

Par ailleurs, la Demanderesse a constaté que l'association de Al$_2$O$_3$ et de MgO, dans des proportions particulières, joue un rôle important dans le comportement des fibres de verre selon l'invention, lorsqu'elles sont incorporées dans un produit à base de ciment.

Toutefois, il est évident pour l'homme de l'art que les verres pauvres en SiO$_2$ et très riches en Al$_2$O$_3$ et MgO sont difficilement fusibles et dévitrifient à des températures élevées, si l'on ne prend pas la précaution d'ajouter d'autres composants.

Pour limiter ces inconvénients, la Demanderesse recommande de maintenir les composants principaux entre les limites suivantes :

| | |
|---|---|
| SiO$_2$ | 35 à 54 % |
| Al$_2$O$_3$ | 20 à 40 % |
| MgO | 24 à 40 % |
| ZrO$_2$ | 1 à 5 % |

Un domaine préféré de l'invention a trait aux fibres de verre dont la composition est comprise dans les limites suivantes :

| | |
|---|---|
| SiO$_2$ | 40 à 51 % |
| Al$_2$O$_3$ | 20 à 35 % |
| MgO | 25 à 35 % |
| ZrO$_2$ | 1 à 5 % |

la somme 2 MgO + Al$_2$O$_3$ étant de préférence supérieure ou égale à 75 %.

Suivant une autre caractéristique de l'invention, des composants secondaires choisis dans le groupe P$_2$O$_5$, TiO$_2$, B$_2$O$_3$, F, Cr$_2$O$_3$, peuvent être ajoutés aux oxydes précédents, séparément ou simultanément, de telle sorte que la somme desdits composants est au plus égale à 20 % en poids.

Ces composants contribuent à l'ajustement de la viscosité du verre tout en maintenant ou en améliorant le comportement des fibres de verre selon l'invention, lorsque lesdites fibres sont incorporées dans un produit à base de ciment.

Selon cette seconde caractéristique, les compositions des fibres de verre faisant l'objet de la présente invention sont définies par les limites pondérales suivantes :

| | |
|---|---|
| SiO$_2$ | 25 à 51 % |
| Al$_2$O$_3$ | 20 à 35 % |
| MgO | 24 à 37 % |
| ZrO$_2$ | 1 à 5 % |
| P$_2$O$_5$, TiO$_2$, B$_2$O$_3$, F, Cr$_2$O$_3$ | 1 à 20 % |

Un domaine préféré de cette famille de verres est déterminé par les limites suivantes :

| | |
|---|---|
| SiO$_2$ | 28 à 48 % |
| Al$_2$O$_3$ | 20 à 32 % |
| MgO | 25 à 35 % |
| ZrO$_2$ | 1 à 5 % |
| P$_2$O$_5$, TiO$_2$, B$_2$O$_3$, F, Cr$_2$O$_3$ | 3 à 15 % |

D'une façon générale, les verres selon l'invention sont élaborés à partir de matières premières naturelles et peuvent donc comprendre d'autres éléments, introduits sous forme d'impuretés, dont la somme n'excède pas 3 % en poids.

Les avantages procurés par les fibres de verre selon l'invention, par rapport aux fibres de verre connues, ressortent clairement lorsqu'on mesure certaines caractéristiques mécaniques des produits composites réalisés à partir desdites fibres et de ciment. La Demanderesse a en effet constaté, lors de tests de vieillissement appliqués à de tels produits, que les propriétés mécaniques des composites comprenant des fibres de verre selon l'invention demeuraient, à l'issue de ces vieillissements, supérieures à celles des composites mettant en œuvre des fibres de verre de résistance chimique pourtant au moins équivalente.

Ces essais sont réalisés dans les conditions suivantes :

Des nappes, constituées de filaments continus et alignés, maintenus par un léger encollage, sont imprégnées individuellement par une pâte de ciment PORTLAND pur, puis empilées. Cet empilement est maintenu en compression (6 à 7 daN/cm²) pendant la prise du ciment afin de réaliser l'adhérence entre couches. Les filaments de verre ont un diamètre voisin de 20 µm et le grammage de chaque nappe est de l'ordre de 100 g/m².

Dans ces conditions, le verre représente 25 à 30 % du poids total du composite, soit un taux volumique compris entre 11 et 16 %.

Les composites ainsi réalisés sont mûris à 20 °C pendant 7 jours en atmosphère humide saturante. Après mûrissement, les composites sont immergés dans de l'eau maintenue à 80 °C.

L'influence du vieillissement est observée à l'aide d'essais de flexion en trois appuis, sur des éprouvettes de 80 × 17 mm dont l'épaisseur est comprise entre 1,5 et 2 mm. A ce sujet, une des caractéristiques les plus révélatrices du comportement à long terme du ciment renforcé, est la déformation à rupture en flexion ε.

La méthode de calcul de cette caractéristique est décrite dans l'article de J. AVESTON, R.A. MERCER et J.M. SILLWOOD intitulé « Fibre reinforced cements — scientific foundations for specifications » et publié dans les comptes-rendus de la conférence ayant pour thème « Composites — Standards testing and design ». (National Physical Laboratory, Teddington, Middlesex — 8 et 9 Avril 1974).

Dans l'annexe ci-jointe figurent des exemples de verres selon l'invention, numérotés de 1 à 12, et des exemples de verre déjà connus, numérotés de I à V. Il est indiqué pour chaque verre, la valeur de la déformation à rupture en flexion obtenue à l'issue de trois temps de vieillissement : 2, 7 et 28 jours ; chaque valeur représente la moyenne de huit mesures.

Les résultats mentionnés en annexe montrent que les fibres de verre selon l'invention, associées au ciment, permettent d'obtenir des produits composites dont la tenue mécanique dans le temps évolue de façon beaucoup plus favorable que celle des autres composites. Ce comportement est d'autant plus remarquable, que les verres déjà connus présentent une résistance aux solutions alcalines tout à fait comparable à celle des verres selon l'invention.

On peut remarquer encore que les fibres de verre selon l'invention présentent une composition telle que les matières premières utilisables pour constituer le mélange vitrifiable sont abondamment disponibles dans la nature ; en particulier, les minéraux porteurs de MgO peuvent être, par exemple, le talc et la giobertite. Même pour apporter $ZrO_2$, on peut se contenter, dans bien des cas, de faire appel à des minéraux de faibles teneurs en $ZrO_2$, tels que certains grès naturels très bon marché.

4

| | 1 | 2 | 3 | 4 | 5 | 6 | 7 | 8 | 9 | 10 | 11 | Exemples de verres connus | | | | |
| | | | | | | | | | | | | I | II | III | IV | V |
|---|---|---|---|---|---|---|---|---|---|---|---|---|---|---|---|---|
| $SiO_2$ | 43 | 33,2 | 47,3 | 29 | 33,6 | 33,6 | 41,9 | 45 | 39 | 34 | 34 | 60 | 62,7 | 58,2 | 49 | 54,6 |
| $Al_2O_3$ | 25 | 25 | 25 | 25 | 25 | 25 | 25 | 25 | 25 | 25 | 25 | 8 | | 15 | 30 | 15 |
| $MgO$ | 25 | 25 | 25 | 25 | 25 | 30 | 30 | 25 | 25 | 25 | 33 | 25 | | 25 | 10 | 12,5 |
| $CaO$ | | | | | | | | | | | | | 5,2 | | | 12,5 |
| $ZrO_2$ | 5 | 5 | 1 | 5 | 5 | 5 | 1 | 3 | 3 | 3 | 1 | 5 | 16,6 | | 10 | 5 |
| $Na_2O$ | | | | | | | | | | | | | 14,6 | | | |
| $P_2O_5$ | | | | 5 | 5 | | | | | | | | | | | |
| $F$ | | | | 5 | | | | | | | | | | | | |
| $TiO_2$ | | | | | | | | | | 3 | | | | | | |
| $B_2O_3$ | | 10 | | 5 | 5 | 5 | | | 5 | 8 | 5 | | | | | |
| $Cr_2O_3$ | | | | | | | | | 1 | | | | | | | |
| Impuretés : | 2 | 1,8 | 1,7 | 1 | 1,4 | 1,4 | 2,1 | 2 | 2 | 2 | 2 | 2 | 0,9 | 1,8 | 1 | 0,4 |
| $\varepsilon (\times 10^3)$ | | | | | | | | | | | | | | | | |
| 2 Jo. | 4,8 | 5,5 | 4,9 | | 5,8 | | | 4,8 | | 4,8 | | 4,0 | 3,8 | 4,8 | 4,5 | 4,1 |
| 7 Jo. | 4,7 | 5,3 | 4,7 | 5,4 | 5,8 | | | 4,7 | 4,3 | 4,7 | | 3,7 | 2,3 | 4,1 | 2,9 | 2,5 |
| 28 Jo. | 5,0 | 5,1 | 5,1 | 5,4 | 5,8 | 6,4 | 6,3 | 4,4 | 4,4 | 5,1 | 6,8 | 2,7 | 1,7 | 3,9 | 2,4 | 1,8 |

**0 014 160**

**Revendications**

1. Fibre de verre résistant aux milieux fortement basiques, caractérisée en ce qu'elle comprend en pourcentages pondéraux :

| | |
|---|---|
| $SiO_2$ | 25 à 54 % |
| $Al_2O_3$ | 20 à 40 % |
| MgO | 24 à 40 % |
| $ZrO_2$ | 1 à 5 % |
| $P_2O_5$ | 0 à 10 % |
| $TiO_2$ | 0 à 10 % |
| $B_2O_3$ | 0 à 10 % |
| F | 0 à 5 % |
| $Cr_2O_3$ | 0 à 2 % |

en considérant que la somme 2 MgO + $Al_2O_3$ est au moins égale à 70 %.

2. Fibre de verre selon la revendication 1, caractérisée en ce qu'elle comprend en pourcentages pondéraux :

| | |
|---|---|
| $SiO_2$ | 35 à 54 % |
| $Al_2O_3$ | 20 à 40 % |
| MgO | 24 à 40 % |
| $ZrO_2$ | 1 à 5 % |

3. Fibres de verre selon la revendication 2, caractérisée en ce qu'elle comprend en pourcentages pondéraux :

| | |
|---|---|
| $SiO_2$ | 40 à 51 % |
| $Al_2O_3$ | 20 à 35 % |
| MgO | 25 à 35 % |
| $ZrO_2$ | 1 à 5 % |

en considérant que la somme 2 MgO + $Al_2O_3$ est au moins égale à 75 %.

4. Fibre de verre selon la revendication 1, caractérisée en ce qu'elle comprend en pourcentages pondéraux :

| | |
|---|---|
| $SiO_2$ | 25 à 51 % |
| $Al_2O_3$ | 20 à 35 % |
| MgO | 24 à 37 % |
| $ZrO_2$ | 1 à 5 % |

et qu'elle comprend en outre au moins un constituant choisi dans le groupe suivant : $P_2O_5$, $TiO_2$, $B_2O_3$, F, $Cr_2O_3$, la somme de ces constituants restant comprise entre 1 et 20 % en poids.

5. Fibre de verre selon la revendication 4, caractérisée en ce qu'elle comprend en pourcentages pondéraux :

| | |
|---|---|
| $SiO_2$ | 28 à 48 % |
| $Al_2O_3$ | 20 à 32 % |
| MgO | 25 à 35 % |
| $ZrO_2$ | 1 à 5 % |

et qu'elle comprend en outre au moins un constituant choisi dans le groupe suivant : $P_2O_5$, $TiO_2$, $B_2O_3$, F, $Cr_2O_3$, la somme de ces constituants restant comprise entre 3 et 15 % en poids.

6. Application de la fibre de verre selon l'une quelconque des revendications 1 à 5 au renforcement de produit à base de ciment.

7. Produits composites constitués de ciment renforcé par les fibres de verre selon l'une quelconque des revendications 1 à 5.

**Claims**

1. Glass fibre resistant to strongly basic media, characterised in that it includes, in percentages by weight :

| | |
|---|---|
| $SiO_2$ | 25 to 54 % |

6

| | |
|---|---|
| $Al_2O_3$ | 20 to 40 % |
| MgO | 24 to 40 % |
| $ZrO_2$ | 1 to 5 % |
| $P_2O_5$ | 0 to 10 % |
| $TiO_2$ | 0 to 10 % |
| $B_2O_3$ | 0 to 10 % |
| F | 0 to 5 % |
| $Cr_2O_3$ | 0 to 2 % |

provided that the sum $2\,MgO + Al_2O_3$ is equal to at least 70 %.

2. Glass fibre according to Claim 1, characterised in that it includes in percentages by weight :

| | |
|---|---|
| $SiO_2$ | 35 to 54 % |
| $Al_2O_3$ | 20 to 40 % |
| MgO | 24 to 40 % |
| $ZrO_2$ | 1 to 5 % |

3. Glass fibre according to Claim 2, characterised in that it includes in percentages by weight :

| | |
|---|---|
| $SiO_2$ | 40 to 51 % |
| $Al_2O_3$ | 20 to 35 % |
| MgO | 25 to 35 % |
| $ZrO_2$ | 1 to 5 % |

provided that the sum $2\,MgO + Al_2O_3$ is equal to at least 75 %.

4. Glass fibre according to Claim 1, characterised in that it includes in percentages by weight :

| | |
|---|---|
| $SiO_2$ | 25 to 51 % |
| $Al_2O_3$ | 20 to 35 % |
| MgO | 24 to 37 % |
| $ZrO_2$ | 1 to 5 % |

and in that it further includes at least one constituent selected from the following group : $P_2O_5$, $TiO_2$, $B_2O_3$, F, $Cr_2O_3$, the sum of these constituents remaining between 1 and 20 % by weight.

5. Glass fibre according to Claim 4, characterised in that it includes in percentages by weight :

| | |
|---|---|
| $SiO_2$ | 28 to 48 % |
| $Al_2O_3$ | 20 to 32 % |
| MgO | 25 to 35 % |
| $ZrO_2$ | 1 to 5 % |

and in that it further includes at least one constituent selected from the following group : $P_2O_5$, $TiO_2$, $B_2O_3$, F, $Cr_2O_3$, the sum of these consituents remaining between 3 and 15 % by weight.

6. Application of glass fibre according to any one of Claims 1 to 5 to the reinforcement of cement based products.

7. Composite products comprising cement reinforced by glass fibres according to any of Claims 1 to 5.


**Ansprüche**

1. Gegen stark basische Milieus beständige Glasfaser, dadurch gekennzeichnet, daß sie enthält in Gew.-% :

| | |
|---|---|
| $SiO_2$ | 25 bis 54 % |
| $Al_2O_3$ | 20 bis 40 % |
| MgO | 24 bis 40 % |
| $ZrO_2$ | 1 bis 5 % |
| $P_2O_5$ | 0 bis 10 % |
| $TiO_2$ | 0 bis 10 % |
| $B_2O_3$ | 0 bis 10 % |
| F | 0 bis 5 % |
| $Cr_2O_3$ | 0 bis 2 % |

mit der Maßgabe, daß die Summe $2\,MgO + Al_2O_3$ mindestens 70 % beträgt.

2. Glasfaser nach Anspruch 1, dadurch gekennzeichnet, daß sie enthält in Gew.-% :

| | |
|---|---|
| $SiO_2$ | 35 bis 54 % |
| $Al_2O_3$ | 20 bis 40 % |
| MgO | 24 bis 40 % |
| $ZrO_2$ | 1 bis 5 % |

3. Glasfaser nach Anspruch 2, dadurch gekennzeichnet, daß sie enthält in Gew.-% :

| | |
|---|---|
| $SiO_2$ | 40 bis 51 % |
| $Al_2O_3$ | 20 bis 35 % |
| MgO | 25 bis 35 % |
| $ZrO_2$ | 1 bis 5 % |

mit der Maßgabe, daß die Summe 2 MgO + $Al_2O_3$ mindestens 75 % beträgt.

4. Glasfaser nach Anspruch 1, dadurch gekennzeichnet, daß sie enthält in Gew.-% :

| | |
|---|---|
| $SiO_2$ | 25 bis 51 % |
| $Al_2O_3$ | 20 bis 35 % |
| MgO | 24 bis 37 % |
| $ZrO_2$ | 1 bis 5 % |

und daß sie außerdem mindestens einen Vertreter aus der Gruppe $P_2O_5$, $TiO_2$, $B_2O_3$, F, $Cr_2O_3$ enthält, wobei die Summe dieser Vertreter zwischen 1 und 20 Gew.-% bleibt.

5. Glasfaser nach Anspruch 4, dadurch gekennzeichnet, daß sie enthält in Gew.-% :

| | |
|---|---|
| $SiO_2$ | 28 bis 48 % |
| $Al_2O_3$ | 20 bis 32 % |
| MgO | 25 bis 35 % |
| $ZrO_2$ | 1 bis 5 % |

und daß sie außerdem mindestens einen Vertreter aus der Gruppe $P_2O_5$, $TiO_2$, $B_2O_3$, F und $Cr_2O_3$ enthält, wobei die Summe dieser Vertreter zwischen 3 und 15 Gew.-% bleibt.

6. Anwendung der Glasfaser nach einem der Ansprüche 1 bis 5 zum Verstärken eines Produkts auf Zementbasis.

7. Zusammengesetzte Produkte, bestehend aus Zement, der durch Glasfasern nach einem der Ansprüche 1 bis 5 verstärkt ist.